# EUROPÄISCHE PATENTANMELDUNG

(11) **EP 2 450 701 A1**
(43) Veröffentlichungstag der Anmeldung: **09.05.2012**
(21) Anmeldenummer: 10189847.6
(22) Anmeldetag: 03.11.2010
(51) Int. Cl.: G01N 29/22

(54) **Verstellbarer Vorsatzkeil für Ultraschallprüfköpfe**

(71) Anmelder: SIEMENS AKTIENGESELLSCHAFT, 80333 München (DE)
(72) Erfinder: Clossen-von Lanken Schulz, Michael, 47661, Issum (DE); Obermayr, Stefan, 45475, Mülheim (DE)

(57) **Zusammenfassung**

Es wird eine Vorrichtung zur Ultraschallmessung (1, 11) beschrieben, die ein Trägerelement (2, 12) und einen Ultraschallprüfkopf (3, 13) mit einer Schallaustrittsrichtung (4, 14) umfasst. Dabei umfasst das Trägerelement (2, 12) eine Schallaustrittsfläche (5, 15) mit einer Flächennormale (6, 16). Der Ultraschallprüfkopf (3, 13) ist mit dem Trägerelement (2, 12) drehbar gelagert verbunden, sodass der Winkel α zwischen der Schallaustrittsrichtung (4, 14) und der Flächennormale (6, 16) der Schallaustrittsfläche (5, 15) variiert werden kann.

## Beschreibung

Die vorliegende Erfindung betrifft eine Vorrichtung zur Ultraschallmessung. Im Rahmen zahlreicher technischer Anwendungen werden Bauteile mit Hilfe von Ultraschallmessungen überprüft, um insbesondere ihre Qualität und/oder ihren Verschleiß zu bestimmen.

Für Ultraschallmessungen werden oft sogenannte Vorsatzkeile verwendet um Ultraschallköpfe für verschiedene Einschallwinkel anzupassen und zu optimieren. Insbesondere werden mit Hilfe der Vorsatzkeile Ultraschallköpfe an verschiedene Oberflächengeometrien angepasst und für bestimmte Einschallwinkel ausgelegt. Das gilt für konventionelle Ultraschallprüftechniken wie für Gruppenstrahler gleichermaßen.

Bisher kamen für die Winkelanpassung verschiedene Vorsatzkeile zum Einsatz. Diese mussten für unterschiedliche Winkel oder unterschiedliche Winkelbereiche umgebaut werden. Durch die begrenzte Zahl verschiedener Vorsatzkeile war der Einschallwinkel oder der Einschallwinkelbereich oftmals nicht optimal. Besonders bei der Verwendung im Labor, aber auch beim Einsatz auf Baustellen, hat sich dies als nachteilig erwiesen.

Es ist daher die Aufgabe der vorliegenden Erfindung, eine einstellbare Vorrichtung zur Ultraschallmessung zur Verfügung zu stellen.

Diese Aufgabe wird durch eine Vorrichtung zur Ultraschallmessung gemäß Anspruch 1 gelöst. Die anhängigen Ansprüche enthalten weitere, vorteilhafte Ausgestaltungen der Erfindung.

Die erfindungsgemäße Vorrichtung zur Ultraschallmessung umfasst ein Trägerelement und einen Ultraschallprüfkopf. Der Ultraschallprüfkopf umfasst eine Schallaustrittsrichtung beziehungsweise weist eine Schallaustrittsrichtung auf. Das Trägerelement umfasst eine Schallaustrittsfläche. Die Schallaustrittsfläche ist durch eine Flächennormale gekennzeichnet. Der Ultraschallprüfkopf ist mit dem Trägerelement drehbar gelagert verbunden, so dass der Winkel α zwischen der Schallaustrittsrichtung und der Flächennormale der Schallaustrittsfläche variiert werden kann.

Der Ultraschallprüfkopf ist also mit dem Trägerelement derart verbunden, dass der Ultraschallprüfkopf in Bezug auf das Trägerelement zumindest teilweise gedreht werden kann. Auf diese Weise kann der Winkel des Ultraschallprüfkopfes beziehungsweise der Winkel der Einschallrichtung zur Schallaustrittsfläche beziehungsweise zur Flächennormale der Schallaustrittsfläche des Trägerelements mechanisch variiert werden. Der Vorteil der vorliegenden Erfindung liegt also darin, dass der Winkel des Ultraschallprüfkopfes zur Schallaustrittsfläche des Trägerelements mechanisch eingestellt werden kann.

Vorteilhafterweise kann der Ultraschallprüfkopf an dem Trägerelement drehbar gelagert, wie oben beschrieben, befestigt sein. Vorzugsweise kann der Ultraschallprüfkopf, im Folgenden als Prüfkopf bezeichnet, mit einem Führungselement verbunden sein. Dabei kann das Führungselement mit dem Trägerelement drehbar gelagert verbunden sein oder an dem Trägerelement drehbar gelagert befestigt sein.

Das Trägerelement kann grundsätzlich als sogenannter Vorsatzkeil ausgestaltet sein. Weiterhin kann das Trägerelement eine äußere Oberfläche umfassen. Vorteilhafterweise können der Prüfkopf und/oder das Führungselement innerhalb der äußeren Oberfläche angeordnet sein. Es können also der Prüfkopf und/oder das Führungselement im Inneren oder innerhalb des Trägerelements angeordnet sein.

Das Trägerelement und/oder das Führungselement können Kunststoff, beispielsweise Plexiglas, umfassen. Zum Beispiel können das Trägerelement und/oder das Führungselement aus Kunststoff, insbesondere aus Plexiglas, bestehen.

Darüber hinaus kann das Trägerelement eine Öffnung mit einer Längsachse umfassen. Dabei kann die Längsachse senkrecht zur Flächennormale der Schallaustrittsfläche verlaufen oder angeordnet sein. Vorteilhafterweise kann das Führungselement zumindest teilweise innerhalb der Öffnung angeordnet sein. Die Öffnung kann beispielsweise einen kreisförmigen Querschnitt haben.

Zudem kann das Führungselement die Form eines entlang seiner Längsachse halbierten Zylinders, im Folgenden Halbzylinder genannt, haben. In diesem Fall kann das Führungselement eine flache Oberfläche entlang der Längsachse des halbierten Zylinders oder Halbzylinders umfassen. Die genannte flache Oberfläche entlang der Längsachse soll dabei die Oberfläche bezeichnen, die durch das Halbieren des Zylinders entstanden ist. Die flache Oberfläche kennzeichnet also einen Teil der Mantelfläche, nämlich den flachen Teil der Mandelfläche, des Halbzylinders.

Ein Zylinder ist durch eine Grundfläche, eine Deckfläche und eine Mantelfläche gekennzeichnet, wobei die Grundfläche und die Deckfläche jeweils die Form einer Kreisfläche aufweisen. Im Rahmen der vorliegenden Erfindung kennzeichnen einen Halbzylinder, eine Grundfläche und eine Deckfläche, die jeweils die Form einer Halbkreisfläche aufweisen, und eine Mantelfläche. Die Mantelfläche umfasst dabei einen flachen Bereich und einen gewölbten Bereich. Der gewölbte Bereich schließt sich an die halbkreisförmigen Seiten der Grundfläche und der Deckfläche an. Der flache Bereich schließt sich an die geraden Seiten der Grundfläche und der Deckfläche an, die einem Durchmesser des Halbkreises beziehungsweise des halbierten Kreises entspricht.

Die Längsachse des ehemaligen Zylinders verläuft im Bereich der flachen Oberfläche der Mantelfläche des Halbzylinders. Die gewölbte Oberfläche des Halbzylinders entspricht der Hälfte der Mantelfläche des Vollzylinders. Vorteilhafterweise kann der Prüfkopf an der flachen Oberfläche des Halbzylinders oder des halbierten Zylinders angeordnet sein.

Das Führungselement kann vorteilhafterweise aus Plexiglas bestehen. Ein Halbzylinder aus Plexiglas, der sich in der Bohrung eines Trägerelementes, welches als weiterer Plexiglaskörper ausgestaltet ist, befindet, bietet die Möglichkeit, den Prüfkopf in seinem Winkel relativ zur Schallaustrittsfläche des gesamten Plexiglaskeils zu verändern und somit den Einschallwinkel in das entsprechende, zu untersuchende Material, auf dem der Vorsatzkeil aufliegt, zu variieren.

Weitere Eigenschaften, Merkmale und Vorteile der vorliegenden Erfindung werden im Folgen anhand eines Ausführungsbeispiels unter Bezugnahme auf die beigefügten Figuren näher erläutert. Die beschriebenen Merkmale sind dabei sowohl einzeln als auch in beliebigen Kombinationen miteinander vorteilhaft.
- Figur 1: zeigt schematisch eine erfindungsgemäße Vorrichtung zur Ultraschallmessung.
- Figur 2: zeigt schematisch die in der Figur 1 gezeigte Vorrichtung zur Ultraschallmessung mit einer variierten Prüfkopfposition.
- Figur 3: zeigt schematisch eine weitere Alternative einer Vorrichtung zur Ultraschallmessung in perspektivischer Ansicht.
- Figur 4: zeigt schematisch eine Variante der in der Figur 3 gezeigten Vorrichtung zur Ultraschallmessung mit gedrehtem Prüfkopf.

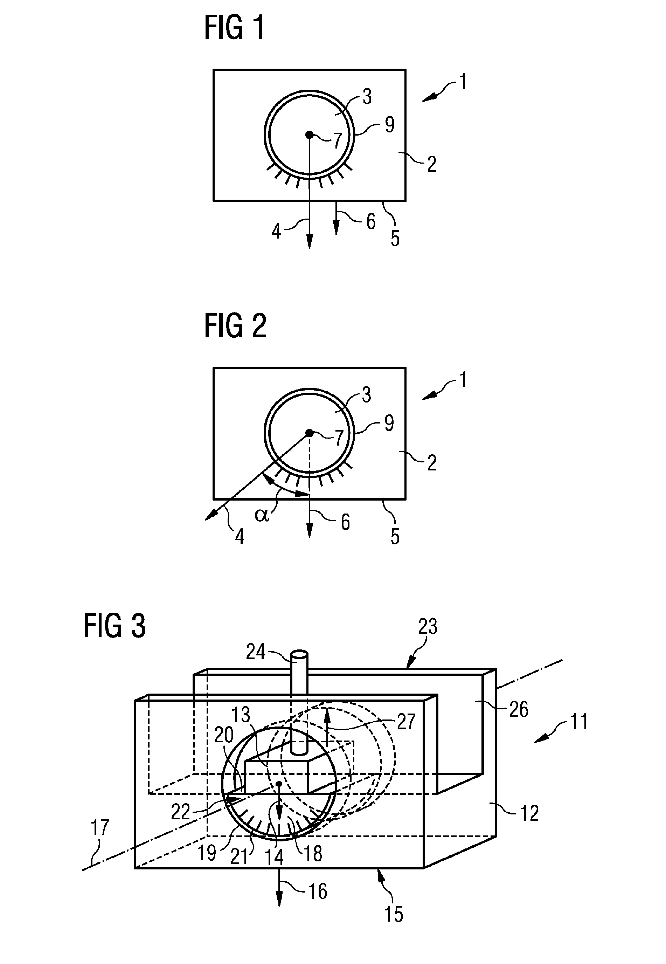

Im Folgenden werden anhand der Figuren 1 und 2 der grundsätzliche Aufbau und die Funktionsweise einer erfindungsgemäßen Vorrichtung zur Ultraschallmessung erläutert. Die Figuren 1 und 2 zeigen schematisch ein Beispiel für eine Vorrichtung zur Ultraschallmessung 1. Die Vorrichtung zur Ultraschallmessung 1 umfasst ein Trägerelement 2 und einen Ultraschallprüfkopf 3. Das Trägerelement 2 umfasst eine Schallaustrittsfläche 5. Die Schallaustrittsfläche 5 ist durch eine Flächennormale 6 gekennzeichnet. Das Trägerelement 2 umfasst weiterhin eine Öffnung 9. Der Ultraschallprüfkopf 3 ist zumindest teilweise innerhalb der Öffnung 9 angeordnet. In den Figuren 1 und 2 hat die Öffnung 9 einen kreisförmigen Querschnitt.

Der Ultraschallprüfkopf 3 zeichnet sich durch eine Schallaustrittsrichtung 4 aus, die Ausbreitungsrichtung des von dem Ultraschallprüfkopf 3 emittierten Ultraschalls kennzeichnet. Der Ultraschallprüfkopf 3 ist in Bezug auf das Trägerelement 2 drehbar gelagert angeordnet. Zum Beispiel ist der Ultraschallprüfkopf 3 an dem Trägerelement 2 so befestigt, dass der Ultraschallprüfkopf 3 um die Drehachse 7 gedreht werden kann.

In der Figur 1 verläuft die Einschallrichtung 4 des Ultraschallprüfkopfes parallel zur Flächennormale 6 der Schallaustrittsfläche 5. In die Figur 2 ist der Ultraschallprüfkopf 3 in Bezug auf das Trägerelement 2 um die Drehachse 7 gedreht worden, so dass die Flächennormale 6 der Schallaustrittsfläche 5 mit der Schallaustrittsrichtung 4 des Ultraschallprüfkopfes 3 einen Winkel α einschließt. Mit Hilfe der erfindungsgemäßen Vorrichtung zur Ultraschallmessung 1 lässt sich also der Einschallwinkel α, auch Schielwinkel genannt, kontinuierlich verändern oder einstellen.

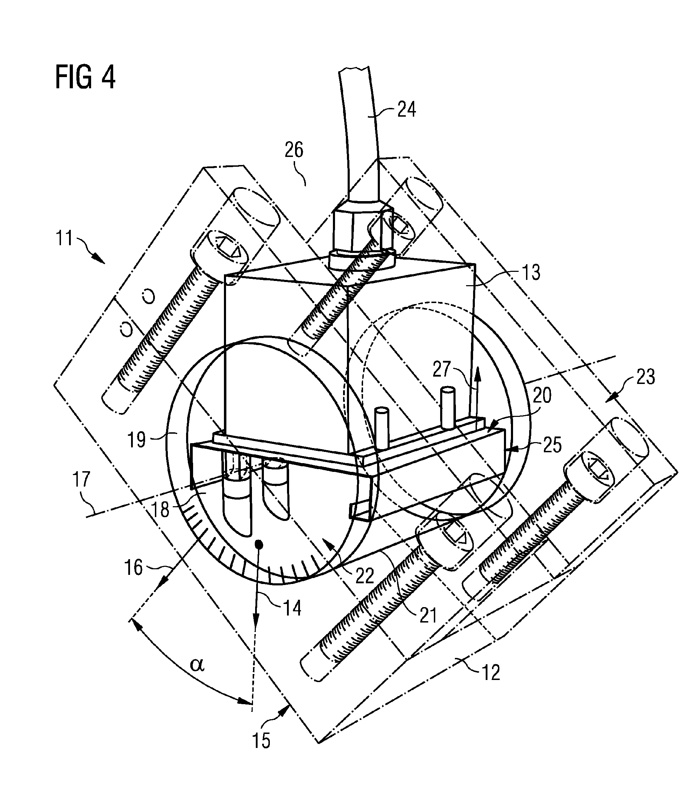

Vorzugsweise kann die erfindungsgemäße Vorrichtung zur Ultraschallmessung 1 an der Schallaustrittsfläche 5 an eine zu untersuchende Oberfläche angelegt oder auf diese aufgelegt werden. Bei der zu untersuchenden Oberfläche oder bei dem zu untersuchenden Bauteil kann es sich insbesondere um Elemente einer Gasturbine, beispielsweise Gasturbinenflügel, handeln. Die Figuren 3 und 4 zeigen eine konkretere Ausführungsvariante einer erfindungsgemäßen Vorrichtung zur Ultraschallmessung in perspektivischer Ansicht. Die in der Figur 3 gezeigte Vorrichtung zur Ultraschallmessung 11 umfasst ein quaderförmiges Trägerelement 12. Das Trägerelement 12 umfasst eine kreisförmige durchgehende Öffnung 19. Weiterhin umfasst das Trägerelement 12 eine Aussparung 26, durch welche die Öffnung 19 von oben her zugänglich ist. Weiterhin umfasst das Trägerelement 12 eine äußere Oberfläche 23.

Innerhalb der äußeren Oberfläche 23 und innerhalb der Öffnung 19 ist ein Führungselement 18 angeordnet. Das Führungselement 19 hat die Form eines halbierten Zylinders. Der halbierte Zylinder umfasst eine Grundfläche 22 und eine Deckfläche 25, sowie eine Mantelfläche. Die Grundfläche 22 und die Deckfläche 25 entsprechen jeweils einer halben Grundfläche beziehungsweise Deckfläche eines Zylinders, d.h. sie haben die Form einer Halbkreisfläche. Die Mantelfläche des Führungselements 18 umfasst eine flache Manteloberfläche 20 und eine gewölbte Manteloberfläche 21. Die flache Manteloberfläche 22 verläuft entlang der Längsachse des ehemaligen Zylinders. Die Längsachse des ehemaligen Zylinders entspricht zugleich der Drehachse 17 des Führungselements 18. Die gewölbte Manteloberfläche 21 verbindet die Seiten der flachen Manteloberfläche 20 miteinander. Die gewölbte Manteloberfläche 21 hat die Form einer halben Manteloberfläche eines Zylinders.

In den Figuren 3 und 4 ist an der flachen Manteloberfläche 20 ein Ultraschallprüfkopf 13 befestigt. An dem Ultraschallprüfkopf 13 ist ein Führungsarm 24 befestigt, mit welchem das Führungselement 18 und der Ultraschallprüfkopf 13 um die Drehachse 17 gedreht werden können. Der Ultraschallprüfkopf 13 ist so an der flachen Oberfläche 20 angeordnet, dass seine Schallaustrittsrichtung 14 parallel zur Flächennormale 27 der flachen Oberfläche 20 verläuft.

In der Figur 3 ist das Führungselement 18 so eingestellt, dass die Schallaustrittsrichtung 14 des Ultraschallprüfkopfes 13 parallel zur Flächennormale 16 der Schallaustrittsfläche 15 verläuft. In der Figur 4 ist das Führungselement 18, beispielsweise mit Hilfe des Führungsarmes 24, um die Drehachse 17 gedreht worden. Die Drehung des Führungselements 18 kann insbesondere manuell erfolgen. In der Figur 4 ist in Folge der Drehung des Führungselements 18 um die Drehachse 17 der Ultraschallprüfkopf 13 in Bezug auf die Schallaustrittsfläche 15 so angeordnet, dass die Schallaustrittsrichtung 14 mit der Flächennormale 16 der Schallaustrittsfläche 15 einen Winkel α einschließt.

In der Figur 3 ist der Ultraschallprüfkopf 13 im Vergleich zu der Darstellung in der Figur 4 zur Vereinfachung kleiner dargestellt. In der Figur 3 ist somit das Führungselement 18 und der Ultraschallprüfkopf 13 vollständig innerhalb der äußeren Oberfläche 23 des Trägerelements 12 angeordnet. In der Figur 4 ist das Führungselement 22 vollständig und der Ultraschallprüfkopf 13 zumindest teilweise innerhalb der äußeren Oberfläche 23 des Trägerelements 12 angeordnet. Auf diese Weise wird eine kompakte Vorrichtung realisiert.

Weiterhin ist das halbzylinderförmige Führungselement 18 in den Figuren 3 und 4 innerhalb der Öffnung 19 angeordnet.

Das Trägerelement 2, 12 und/oder das Führungselement 18 können aus Kunststoff, vorteilhafterweise aus Plexiglas bestehen oder Kunststoff, wie beispielsweise Plexiglas umfassen. Insbesondere bietet ein Führungselement 18 in der Form eines Halbzylinders aus Plexiglas, das sich in der Öffnung oder Bohrung 19 eines weiteren Plexiglaskörpers oder Trägerelements 12 befindet, die Möglichkeit, den Prüfkopf 13 in seinem Winkel α relativ zur Schallaustrittsfläche 15 beziehungsweise der Flächennormale 16 der Schallaustrittsfläche 15 des gesamten Plexiglaskeils zu verändern und somit den Einschallwinkel in das zu untersuchende Material, auf dem der Keil beziehungsweise die Vorrichtung zur Ultraschallmessung 1, 11 aufliegt, zu variieren.

## Patentansprüche

1. Vorrichtung zur Ultraschallmessung (1, 11), die ein Trägerelement (2, 12) und einen Ultraschallprüfkopf (3, 13) mit einer Schallaustrittsrichtung (4, 14) umfasst,
wobei das Trägerelement (2, 12) eine Schallaustrittsfläche (5, 15) mit einer Flächennormale (6, 16) umfasst,
**dadurch gekennzeichnet, dass**
der Ultraschallprüfkopf (3, 13) mit dem Trägerelement (2, 12) drehbar gelagert verbunden ist, sodass der Winkel α zwischen der Schallaustrittsrichtung (4, 14) und der Flächennormale (6, 16) der Schallaustrittsfläche (5, 15) variiert werden kann.

2. Vorrichtung (1, 11) nach Anspruch 1,
**dadurch gekennzeichnet, dass**
der Prüfkopf (3, 13) mit einem Führungselement (18) verbunden ist, wobei das Führungselement (18) mit dem Trägerelement (2, 12) drehbar gelagert verbunden ist.

3. Vorrichtung (1, 11) nach Anspruch 1 oder 2,
**dadurch gekennzeichnet, dass**
das Trägerelement (2, 12) als Vorsatzkeil ausgestaltet ist.

4. Vorrichtung (1, 11) nach einem der Ansprüche 1 bis 3,
**dadurch gekennzeichnet, dass**
das Trägerelement (2, 12) einen äußere Oberfläche (23) umfasst und der Prüfkopf (3, 13) und/oder das Führungselement (18) innerhalb der äußeren Oberfläche (23) angeordnet ist.

5. Vorrichtung (1, 11) nach einem der Ansprüche 1 bis 4,
**dadurch gekennzeichnet, dass**
das Trägerelement (2, 12) und/oder das Führungselement (18) Kunststoff umfassen.

6. Vorrichtung (1, 11) nach Anspruch 5,
**dadurch gekennzeichnet, dass**
das Trägerelement (2, 12) und/oder das Führungselement (18) Plexiglas umfassen.

7. Vorrichtung (1, 11) nach einem der Ansprüche 1 bis 6, **dadurch gekennzeichnet, dass**
das Trägerelement (2, 12) eine Öffnung (9, 19) mit einer Längsachse (7, 17) umfasst, wobei die Längsachse (7, 17) senkrecht zur Flächennormale (6, 16) der Schallaustrittsfläche (5, 15) verläuft und das Führungselement (18) zumindest teilweise innerhalb der Öffnung (9, 19) angeordnet ist.

8. Vorrichtung (1, 11) nach Anspruch 7,
**dadurch gekennzeichnet, dass**
die Öffnung (9, 19) einen kreisförmigen Querschnitt aufweist.

9. Vorrichtung (1, 11) nach einem der Ansprüche 2 bis 8, **dadurch gekennzeichnet, dass**
das Führungselement (18) die Form eines entlang seiner Längsachse halbierten Zylinders hat.

10. Vorrichtung (1, 11) nach Anspruch 9,
**dadurch gekennzeichnet, dass**
das Führungselement (18) eine flache Oberfläche (20) entlang der Längsachse des halbierten Zylinders umfasst und der Prüfkopf (3, 13) an der flachen Oberfläche (20) angeordnet ist.
